# EUROPEAN PATENT SPECIFICATION

(11) **EP 2 256 636 B1**
(45) Date of publication and mention of the grant of the patent: **09.05.2012**
(21) Application number: 10004086.4
(22) Date of filing: 16.04.2010
(51) Int. Cl.: G06F 11/20

(54) **Selective mirroring method**
Selektives Spiegelungsverfahren
Procédé de réflexion sélective

(30) Priority: 06.05.2009 KR 20090039190
(43) Date of publication of application: 01.12.2010
(73) Proprietor: Hitachi-LG Data Storage Korea, Inc., Geumcheon-gu Seoul 153-803 (KR)
(72) Inventor: An, Yonghyun, Geumcheon-gu Seoul 153-803 (KR)
(74) Representative: Katérle, Axel

(56) References cited:
- WO-A1-98/13760
- US-A1- 2002 053 009
- US-A1- 2003 093 444
- US-B1- 6 779 003

## Description

### BACKGROUND

### Field

This document relates to a selective mirroring method for effectively implementing a redundant array of inexpensive disks (RAID) function in a network attached storage (NAS) system.

### Related Art

As widely known, a RAID is a technique of redundantly storing data in several storages such as hard disks to thereby enhance reliability or the overall performance of the storages.

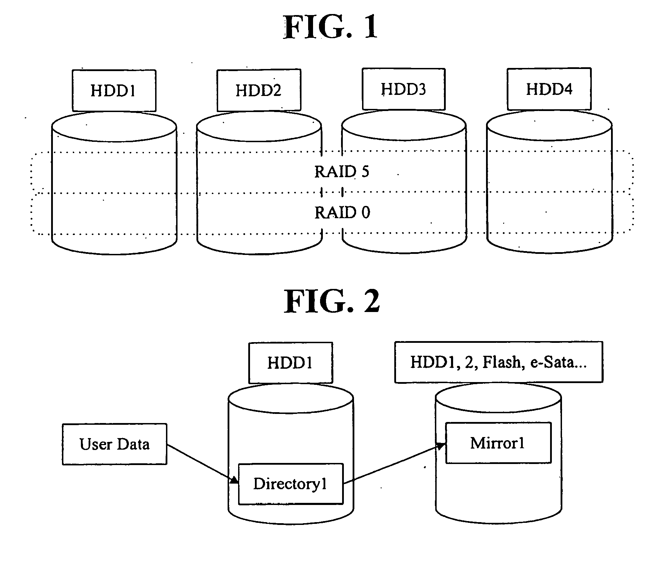

The RAID is operated based on a storage medium, a partition, and the like, having a fixed size, and also operated in a NAS based on a hard disk having a basically fixed size. Thus, it is difficult for a user to freely alter the size of the storage or the RAID method (level). For example, as shown in FIG. 1, once RAID level 0 or 5 is set for four hard disks, the size of the hard disks or the RAID method cannot be modified (altered, or changed) unless the entire disks are re-initialized.

Thus, an application of the RAID technique to the NAS causes the following problems.

First, in terms of flexibility, once the RAID is configured, the RAID cannot be modified into another RAID scheme so long as it is initialized again. In addition, because a minimum configuration unit of the RAID is a partition, it is difficult to freely change the size of the RAID.

Also, in terms of economical efficiency, as shown in FIG. 1, when four HDDs are configured as RAID 5, only third-fourths of the overall capacity of the RAID 5 can be used in terms of the characteristics of the RAID 5, and when two HDDs are configured as RAID 1, only a half of the overall capacity of the RAID 1 can be used. That is, in order to obtain the stability of data storage, the reduction in the storage capacity should be accepted (namely, the stability of data storage is obtained at the cost of the reduction in the storage capacity), and the reconfiguration of the RAID incurs a great deal of time and costs.

In addition, in terms of user convenience, the user necessarily sets the RAID area of HDDs only in initializing the system, so in order to alter the RAID area in the course of operating the system, the user must store all the data in an extra space as a backup, reconfigure the RAID area, and then duplicate the data again.

Namely, in configuring the RAID, the user must configure the RAID area such that it fits the purpose in consideration of the usage amount of data, performance and stability, and if the user's projections are way off, the user is bound to reconfigure the RAID through a complicated procedure which consumes a great deal of time and costs. Thus, if the user does not have an extra storage in which data is to be stored as a backup, the user cannot reconfigure the RAID.

In other words, the RAID used in the NAS system allows for the user to obtain stability of data storage or extension of the storage capacity, but the RAID cannot satisfy both of the two factors. In addition, the modification of the RAID configuration in the course of operating the system incurs much time and costs.
From the document US2002053009 (D1) it is known a RAID storage system data duplication scheme where each file is associated with specific policy constraint, said policy constraints defining on a file-basis whether each file is to be subjected to periodic instant copy operation, mirroring or both.
From the document US6779003 (D2) it is known a file mirroring system using a file system filter being a driver layer provided above a file system driver stack and allowing the backup system to hook' a file system and intercept input/output travelling between the operating system and the underlying layers.
From the document US2003093444 (D3) it is known a selective file-based snapshot creation functionality for a file system whereby a snapshot of user-selected files are created by a daemon at selected time intervals at a user-selected frequency.
From the document W09813760 (D4) it is known a selectable mirroring arrangement for a RAID system for selectively performing mirroring on an individual logical unit basis, whereby mirroring is performed for all blocks written into said selected logical unit, wherein an intra-mirroring functionality is further provided for allowing a user to select data to be additionally protected by writing said selected data to dedicated mirrored logical units of the storage system.

### SUMMARY

An aspect of this document is to provide a method for allowing a user to designate mirroring by the directory or file, thus satisfying a data storage performance, capacity, and stability altogether.

In one aspect of the invention, it is defined a method for maintaining one or more duplicates with respect to a single original in accordance with the appended independent claim 1.

In another aspect of the invention, it is defined a network storage system in accordance with the appended independent claim 8.

The first and second mirroring may be performed in a kernel layer of the OS.

The first mirroring may be performed through hooking of a file I/O system call, and in this case, data may be processed in unit of a message transmitted by an application which has generated a file I/O.

The second mirroring may wake up from a sleep state at a time point when mirroring is required to perform a given operation, and in this case, it may be implemented by a daemon of the kernel.

The second mirroring may be performed when the directory is to be entirely mirrored, when an error occurs in the course of mirroring, or when mirroring is to be performed on a medium to which the first mirroring is hardly applied. When the directory is to be entirely mirrored, an idle state of the system may be considered each time mirroring is performed on a single file or directory within the directory. When an error occurs in the course of mirroring, if the error is recoverable, it may be registered to a list in which the second mirroring is to be performed for items.

The first and second mirroring may be performed in consideration of a configuration file. The configuration file may include at least one of one or more original files or directories to be mirrored, first mirroring/second mirroring selection, a medium for storing a duplicate copy, a second mirroring performance time or a second mirroring performance period, second mirroring execution terms, and a recovery method. When the configuration file is modified, the modification of the configuration may be provided to a mirroring daemon of the kernel.

The medium in which the original and the duplicate are to be stored may include one or more of a hard disk, an optical disk, a non-volatile flash memory, a USB storage, and a storage connected via a network.

According to the present invention, both the data stability and user convenience of the NAS system can be improved, and the RAID function can be implemented in the NAS without having to make a user's complicated setting or changing a program.

### BRIEF DESCRIPTION OF THE DRAWINGS

The implementation of this document will be described in detail with reference to the following drawings in which like numerals refer to like elements.

FIG. 1 illustrates the configuration of a general redundant array of inexpensive disks (RAID);

FIG. 2 is a conceptual view of a selective mirroring method according to an exemplary embodiment of the present invention;

FIG. 3 illustrates a hierarchical structure to which the general RAID is applied;

FIG. 4 illustrates a hierarchical structure to which the selective mirroring method according to an exemplary embodiment of the present invention is applied;

FIG. 5 illustrates an example of a file input/output (I/O) system call used in the selective mirroring method according to an exemplary embodiment of the present invention;

FIG. 6 is a conceptual block diagram of the selective mirroring method according to an exemplary embodiment of the present invention;

FIGs. 7 to 9 are block diagrams for explaining the comparison between direct mirroring implemented in a kernel according to an exemplary embodiment of the present invention and in a user application and RAID mirroring;

FIGs. 10 to 16 are flow chart illustrating the process of the operation of each file I/O system call performed through direct mirroring according to an exemplary embodiment of the present invention;

FIG. 17 is a flow chart illustrating the process of asynchronous mirroring according to an exemplary embodiment of the present invention;

FIGs. 18 to 23 are flow chart illustrating the process of an operation of each function performed through asynchronous mirroring according to an exemplary embodiment of the present invention;

FIG. 24 illustrates a configuration file of selective mirroring according to an exemplary embodiment of the present invention; and

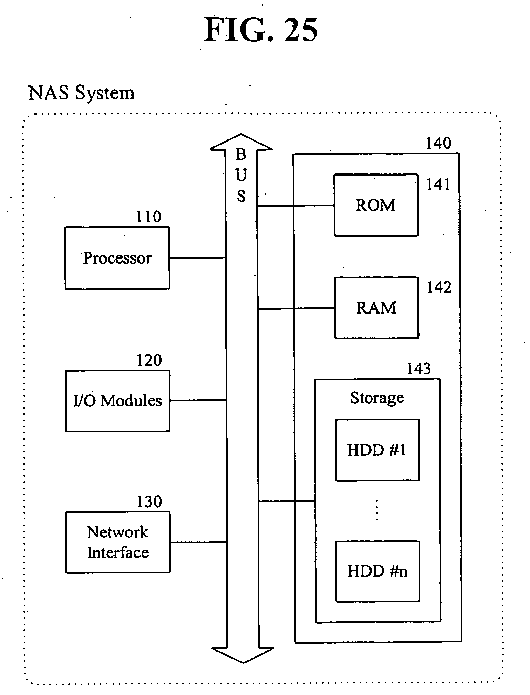

FIG. 25 illustrates the configuration of an NAS to which this document is applied.

### DETAILED DESCRIPTION

A selective mirroring method according to exemplary embodiments of the present invention will now be described in detail with reference to the accompanying drawings.

The selective mirroring method according to an exemplary embodiment of the present invention is applied by the directory or file, including a folder, as a basic unit, can be applicable to a plurality of directories or a plurality of files, and maintains one or more duplicates of the single original.

In an embodiment of the present invention, a read/write function, similar to a redundant array of inexpensive disks (RAID) function, can be performed, and also a mirroring function for redundantly storing one or more data can be performed to prevent a data loss when equipment such as network attached storage (NAS) system or the like is broken down.

For example, as shown in FIG. 2, when the user data is recorded in a first directory 1 (or directoryl) of a first hard disk (or HDD1), the user data is redundantly recorded as a first mirror (or Mirror1) in one or more of other storage mediums (e.g., HDD1, HDD2, Flash, e-Sata network, etc.).

Also, mirroring configuration may be altered while the equipment is managed or operated, and mirroring may be implemented in a kernel layer, e.g., a linux kernel layer, of an operation system (OS).

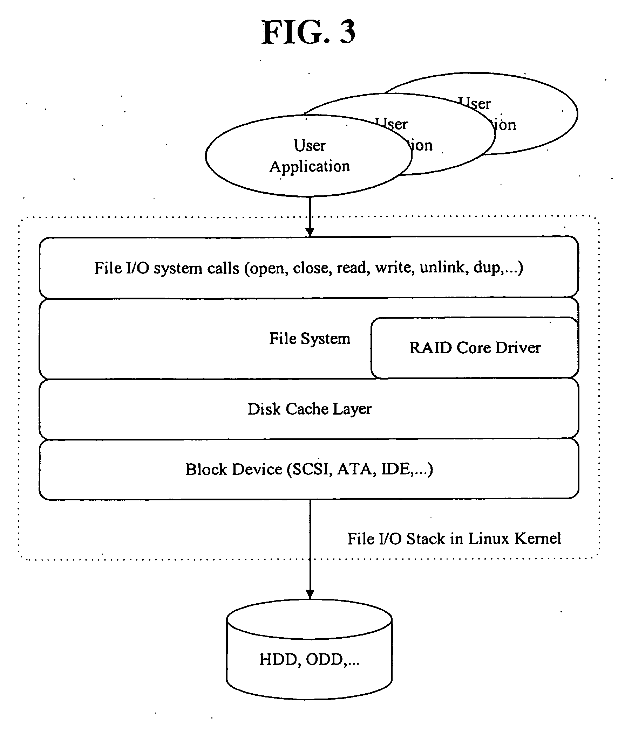

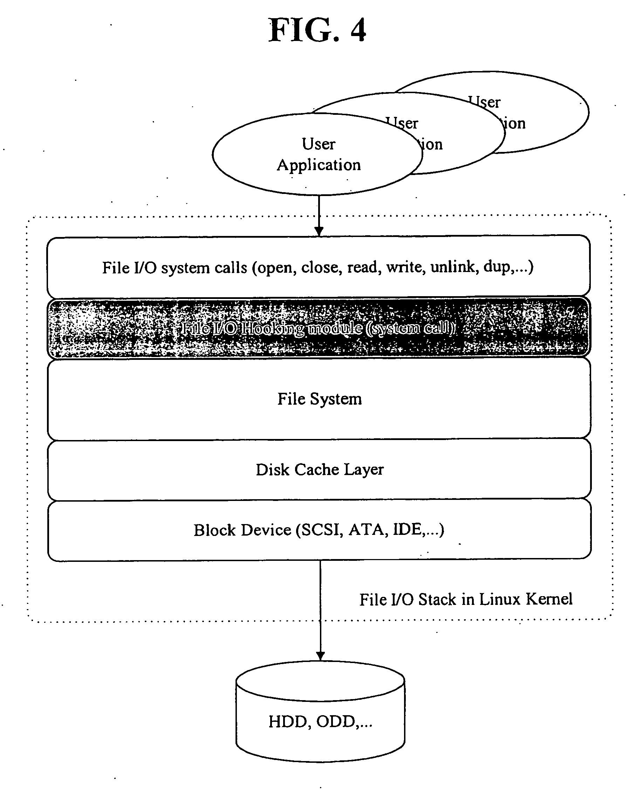

In general, a RAID core driver is implemented in a file system layer of a file I/O stack of a linux system as shown in FIG. 3, while the mirroring according to an exemplary embodiment of the present invention is implemented, for example, through hooking of a file I/O system call, an interface between a Kernel and a user, as shown in FIG. 4.

Through mirroring according to an exemplary embodiment of the present invention, when the original file has an error, the user can manually or automatically recover it, and when the original file is normal, the user does not access the original file for writing. Whether to recover the original file automatically or manually may be set by the user.

The mirroring according to an exemplary embodiment of the present invention is designed to properly cope with a generated error such as an HDD capacity shortage, a bad sector, a file system crash, or the like. For example, destination media in which mirror data is written may be the same HDD, a different HDD, a USB storage, e-Sata, a Network (e.g., NFS, Samba), an ODD (Optical Disc Drive), and the like. Also, without being limited thereto, various types of devices that can be mounted in a file system can be applicable.

Also, as mentioned above with reference to FIG. 4, the mirroring, namely, the selective mirroring method, according to an exemplary embodiment of the present invention may be implemented through hooking in the file I/O system call, an interface between the kernel and the user, and in this case, a user application program manipulates files by using various system calls such as open, close, read, write, rm, link, unlink, rmdir, rename, etc.

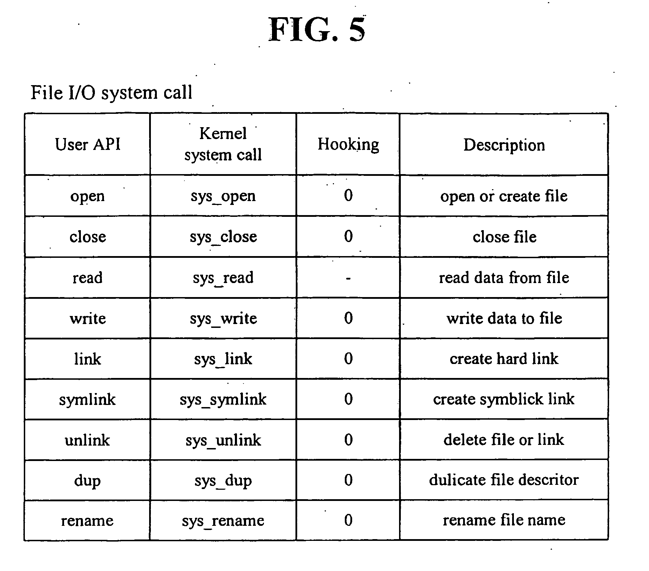

As shown in FIG. 5, a system call function sys_open handles an operation of opening or creating a file, sys_close handles an operation of closing a file, sys_read handles an operation of reading data from a file, and sys_write handles an operation of writing data to a file.

A system call function sys_link handles an operation of generating a hard link, sys_symlink handles an operation of creating a system link, sys_unlink handles an operation of deleting a file or a link, sys_dup handles an operation of duplicating a file descriptor, and sys_rename handles an operation of changing a file name (or renaming a file).

Meanwhile, in the selective mirroring method according to an exemplary embodiment of the present invention, basically, a file I/O which has been generated by the user or a user program is monitored, and when a file I/O is generated for a file or a directory for which mirroring has been set to be performed, the corresponding file I/O is duplicated, and if it has been set to mirror existing files or directories (or folders), the existing files are all mirrored.

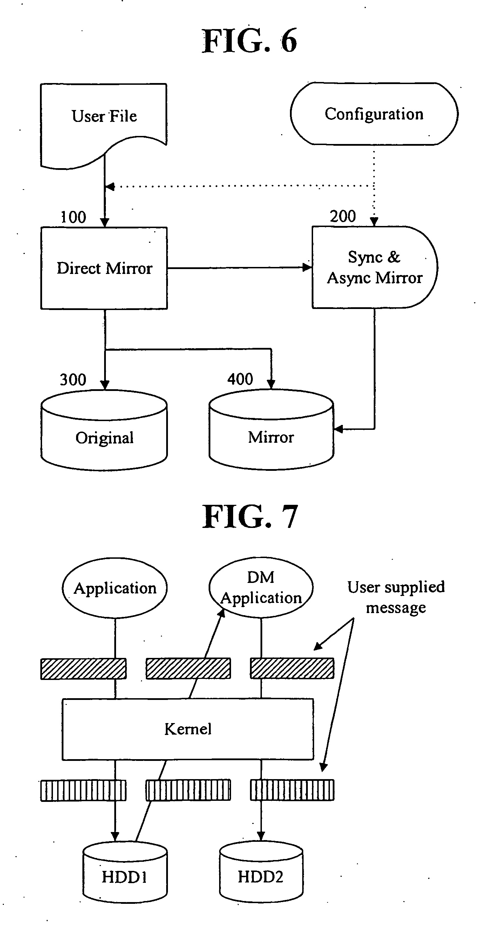

FIG. 6 is a conceptual block diagram of the selective mirroring method according to an exemplary embodiment of the present invention. The selective mirroring according to an exemplary embodiment of the present invention includes a direct mirroring 100 and sync & async mirroring 200.

The direct mirroring 100 is used when an I/O bandwidth and reliability of physical media corresponding to an original media 300 and a mirror media 400 are almost similar.

On the other hand, if the direct mirroring 100 is used when there is a significant difference in the I/O bandwidth and reliability of the mirror media 400, the performance and reliability for the original media are degraded. Thus, in this case, the sync & async mirroring 200 is instead used. The sync & async mirroring 200 may be simply called an async mirroring. Each module will now be described.

First, the direct mirroring 100 will now be described. The direct mirroring 100 performs real time I/O duplication through hooking of a system call at a time point when a file I/O is generated. Because this module is driven in the kernel layer, it does not affect a user application, and also because data duplication does not occur between the user and the kernel; optimum performance can be obtained.

For example, FIGs. 7 to 9 are block diagrams for explaining the comparison between the direct mirroring implemented in a user application and a kernel and a RAID mirroring. The direct mirroring is similar to RAID, but a data storage unit of the direct mirroring is a message, not a block, transmitted to an application. However, in the direct mirroring, although data is stored in units of messages, the data is divided into blocks while passing through a low level driver (e.g., scsi, sata, pata, etc.) within the kernel, so as to be stored.

This means that the direct mirroring processes data by the message provided by the application, while the RAID processes data by the block. In actually storing data in the HDD, the both methods allows for storing of data by the block (or sector).

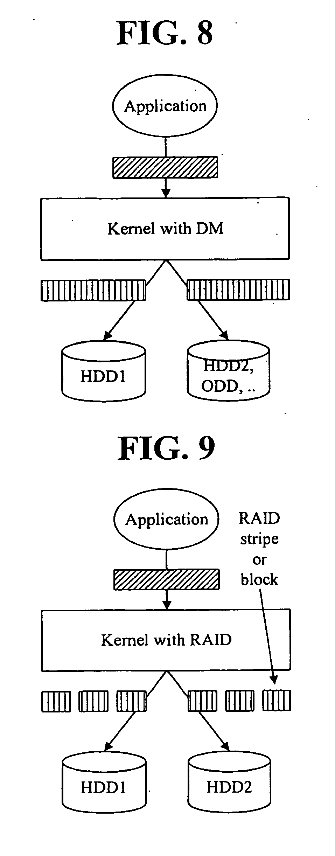

Also, the direct mirroring implemented in the application or that implemented in the kernel are compared as follows. For example, compared with the direct mirroring implemented in the kernel in FIG. 8, the direct mirroring implemented in the application of FIG. 7 is ineffective because memory duplication occurs twice to result in a prolonged execution path to lengthen latency. Also, compared with the direct mirroring implemented in the kernel, the direct mirroring implemented in the application performs merely a data backup function.

Also, unlike the direct mirroring implemented in the kernel, the direct mirroring implemented in the application does not easily perform various control functions such as user concealment of mirror data, deletion prevention, or the like.

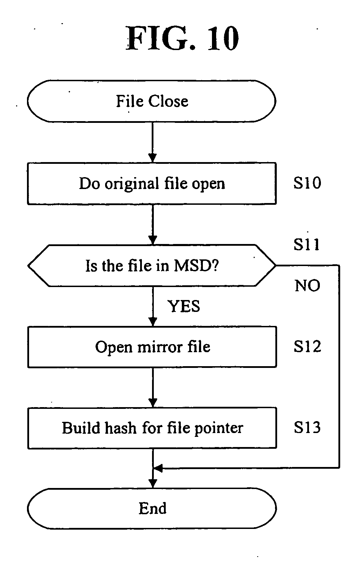

FIGs. 10 to 16 are flow charts illustrating the process of the operation of each system call performed through direct mirroring in the kernel according to an exemplary embodiment of the present invention.

For example, a file opening function in FIG. 10 is performed as follows. An original file is open (S10). When the corresponding file is a file within a mirror source directory (MSD) (Yes in S11), a mirror file is open (S12) and a hash used as a pointer for searching for the corresponding file is built (S13).

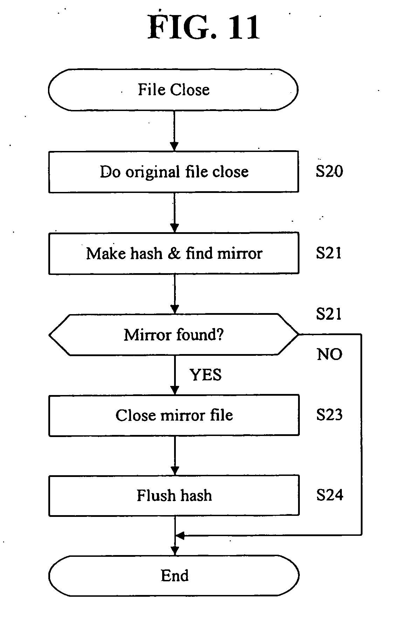

A file closing function in FIG. 11 is performed as follows. The original file is closed (S20). A hash is made and a mirror is searched (S21). When a mirror is found (Yes in S22), the found mirror file is closed (S23) and the hash is flushed (S24).

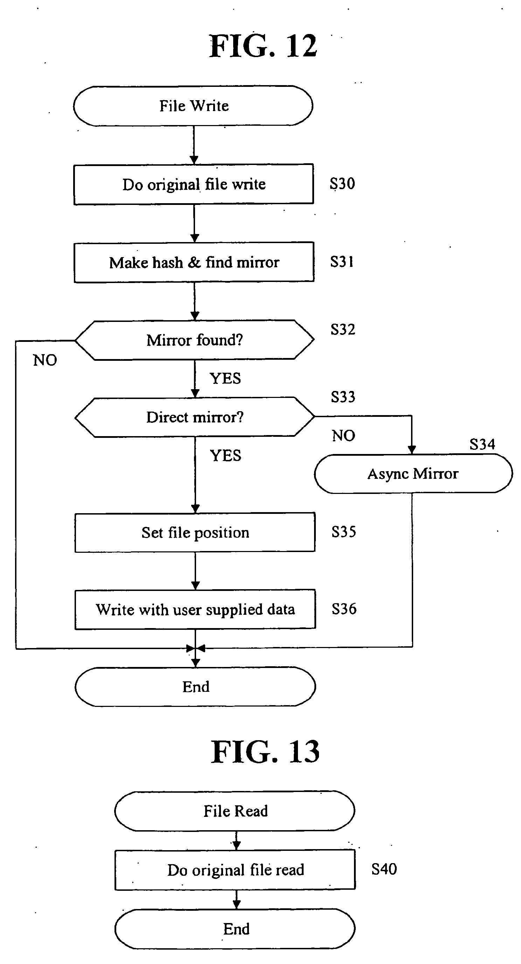

A file writing function in FIG. 12 is performed as follows. An original file is written (S30). A hash is made and a mirror is searched (S31). When a mirror is found (Yes in S32), it is checked whether or not the found mirror is a direct mirror (S33). When the found mirror is an async mirror, not a direct mirror (No in S33), a corresponding function is executed (S34). When the found mirror is a direct mirror (Yes in S33), a file position in which a mirror file is to be written is set (S35), and data supplied by the user is written (S36).

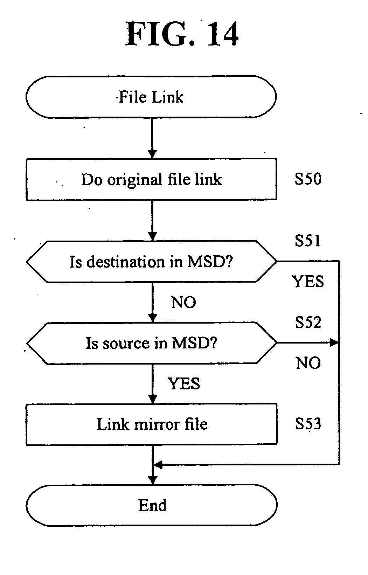

In a file reading function in FIG. 13, only an operation of reading an original file is performed (S40). A file linking function in FIG. 14 is performed as follows. An original file is linked (S50). When a link destination is in a mirror source directory (MSD) (Yes in S51), the process is terminated, or otherwise (No in S51), if the original file is a source in the MSD (Yes in S52), a corresponding mirror file is linked (S53).

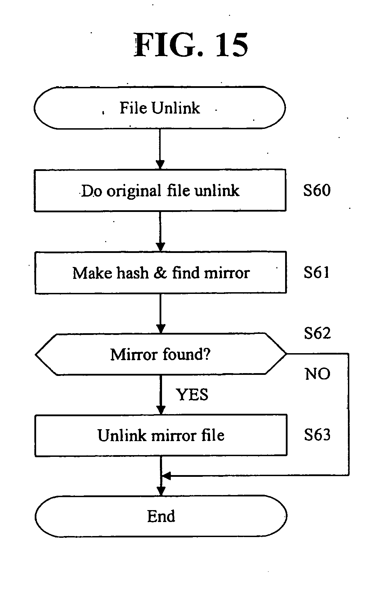

A file unlinking function in FIG. 15 is performed as follows. An original file is unlinked (S60). A hash is made a mirror is searched (S61). When a mirror is found (Yes in S62), the found mirror is unlinked (S63).

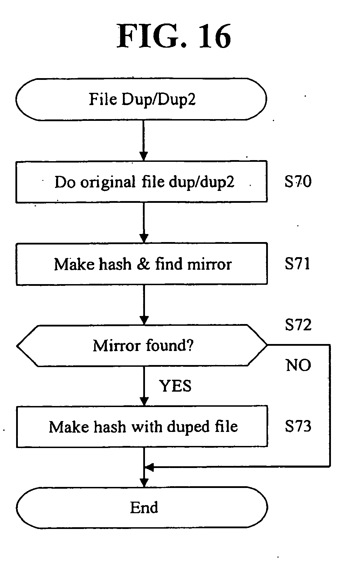

A file duplication (File Dup/Dup2) function in FIG. 16 is performed as follows. An original file is duplicated (S70). A hash is made and a mirror is searched (S71). When a mirror is found (Yes in S72), a file is duplicated and hash is made (S73).

The async mirroring will now be described.

The async mirroring is executed, for example, when full sync is executed, when media is not available for a direct mirroring, or when an error occurs during a direct mirroring. The async mirroring is implemented by a kernel daemon and wakes up from a sleep state at a time point when mirroring is required, to perform a given operation.

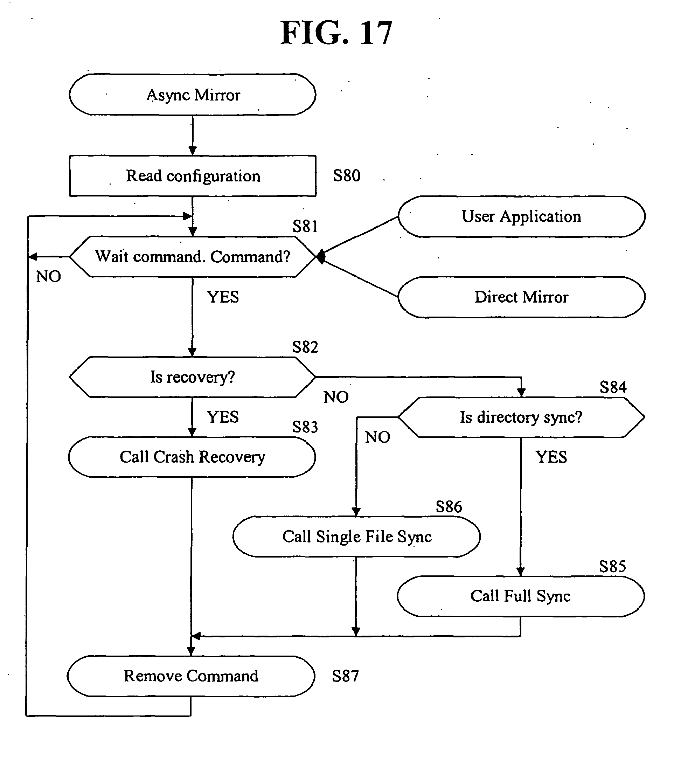

FIG. 17 is a flow chart illustrating the function performed by the async mirroring. First, a configuration is read (S80), and it is awaited whether or not a command is issued by, for example, a user application or a direct mirroring (S81). When a command is received (Yes in S81), the received command is checked. When the checked command is a recovery command (Yes in S82), a crash recovery is called and a corresponding routine is performed (S83). When the received command is not a recovery command (No in S82) but a directory sync (Yes in S84), a full sync function is called and a corresponding routine is performed (S85). When it is not the directory sync (No in S84), a single file sync function is called and a corresponding routine is performed (S86), and then the performed command is removed (S87).

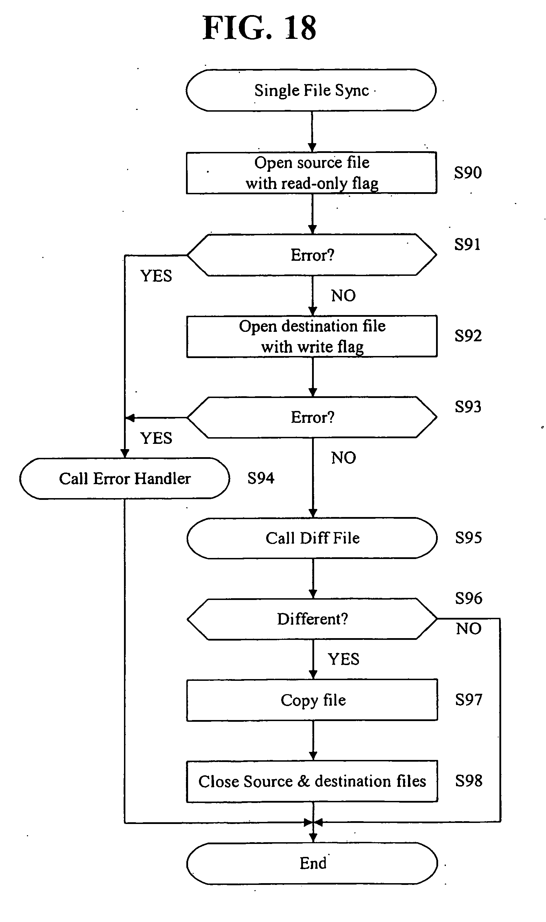

FIG. 18 is a flow chart illustrating the operation of the single file sync function. When the single file sync function is called, a source file is open with a read-only flag set (S90), and a destination file is open with a write flag set (S92). If an error occurs when the source file or the destination file is open (Yes in S91 or S93), an error handler function that handles an error is called and performed (S94).

When the destination file is open without an error (No in S93), a diff file function for comparing the two files and checking a difference therebetween is called and performed (S95). If there is no difference between the two files (No in S96), the process is terminated. If there is a difference (Yes in S96), the source file is copied to the destination file (S96) and the source file and the destination file are closed (S98).

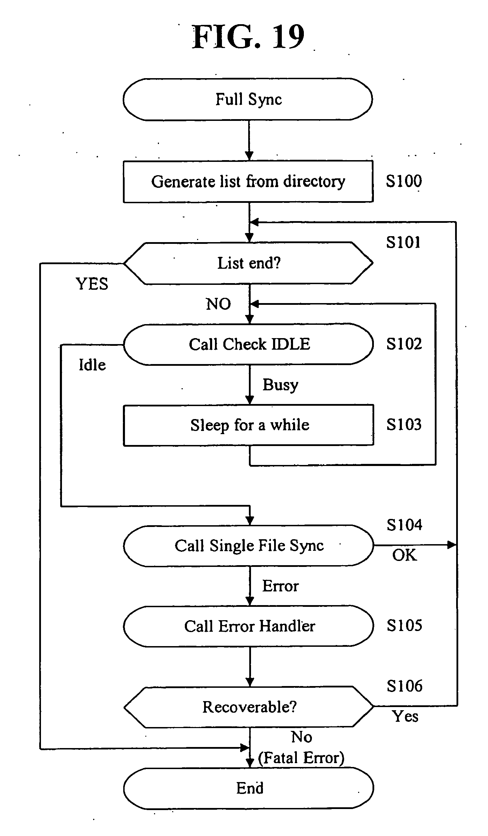

FIG. 19 is a flow chart illustrating the operation of the full sync function. When the full sync function is called, it generates a file and/or directory list to perform synchronization from a directory (S100), and performs a follow-up operation until when all the items (files or directories) on the list are synchronized (S101).

First, an idle check function is called to check whether or not the system is idle, not busy (S102). When the system is checked to be busy, it sleeps for a while (S103).

When the system is idle, the single file sync function is called (S104) and performed repeatedly until when synchronization is performed on all the items on the list. When an error occurs in the single file synchronization operation, the error handler is called (S105). When the error is recoverable (Yes in S106), steps S101 to S104 are repeatedly performed. If the error is not recoverable (No in S106), the error is processed as a fatal error and the process is terminated.

Namely, even if the full sync starts, it should not interfere with the user's operation as best as it can. Thus, after copying of one file is finished, a system idle state is read and only when it is greater than a value (default: 30) designated by the user, copying of a next file can start.

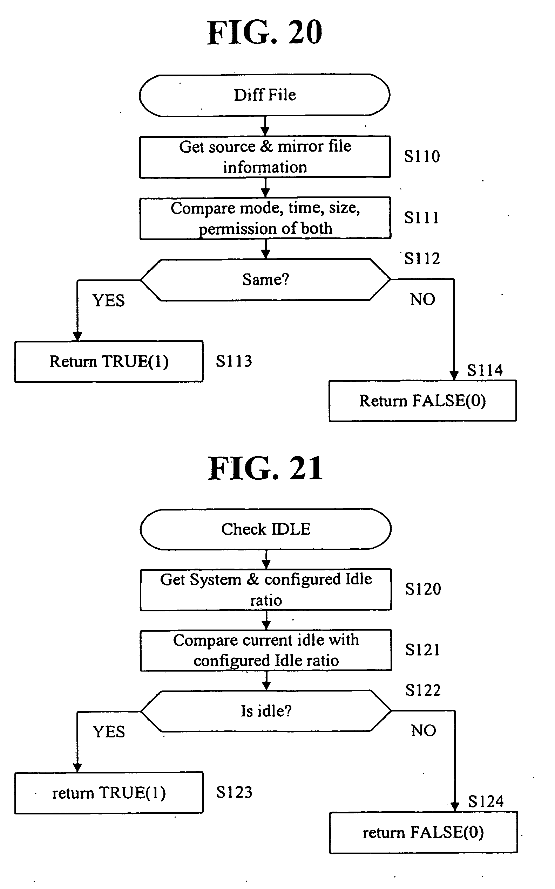

FIG. 20 is a flow chart illustrating the operation of the diff file function. The diff file function acquires information of source and mirror files (S110), and compares the mode, time, size, permission, and the like, of each file (S111). When the source file and the mirror file are same (Yes in S112), the diff file function returns True(1) (S113). If the source file and the mirror file are not same (No in S112), the diff file function returns False(0).

In order to avoid overhead that copies data of the source file to the mirror file even when the source file and the mirror file are same, it is necessary to first check whether or not copying of the file is required. In this case, a method of obtaining each checksum with respect to the files in advance, storing the same, and then comparing only the hashes of the source file an the mirror file may be used, but there is a problem in that implementation of this method is complicated Thus, instead, in an exemplary embodiment of the present invention, whether or not the file has been modified is recognized by comparing a modification time, permission, size, and the like, of the files.

A check idle function in FIG. 21 obtains a current idle degree of the system and an idle ratio stored in the configuration (S120), and compares the current idle degree and the idle ratio stored in the configuration (S121). When the current idle degree is higher than the idle ratio stored in the configuration (S122), the check idle function returns True(1) (S123), or otherwise, the check idle function returns False(0) (S124).

Besides the internal HDD, SSD (Solid State Disk) or non-volatile flash memory, the async mirroring is used to apply mirroring to various types of mediums such as a network driver such as nfs, samba, iSCSI, AOE(ATA Over Ethernet), an optical storage, a USB storage such as a USB flash memory or an external hard of a USB interface, an e-Sata external HDD, and the like.

Meanwhile, because mirroring may be performed in various mediums such as HDD, USB, Network, etc., various types of errors are highly likely to occur. Thus, just in case an error occurs or the direct mirroring is not available, an error handler function is required to process an error and various types of error need to be properly processed.

In mirroring, errors such as a file system crash, a bad sector, a disk capacity shortage, a file lock, and the like, may be considered. The file system crash error occurs when power is forcibly turned off while writing is being performed or when a plug of an external device is arbitrarily pulled out (i.e., to an OFF state). In this case, an alarm sound may be generated for a user recognition or a crash recovery function may be executed.

The bad sector error occurs when a storage medium is worn out or power is turned off while writing is being performed. Also, in this case, an alarm sound may be generated for a user recognition or the crash recovery function may be executed.

The disk capacity shortage error occurs when there is no extra space in a storage medium filled with data. In this case, an alarm sound may be generated for a user recognition, the mirroring may be interrupted, or a temporary file deletion may be performed. The file lock error occurs when a different user application is opening a corresponding file. In this case, the error may be processed by the async mirroring scheme.

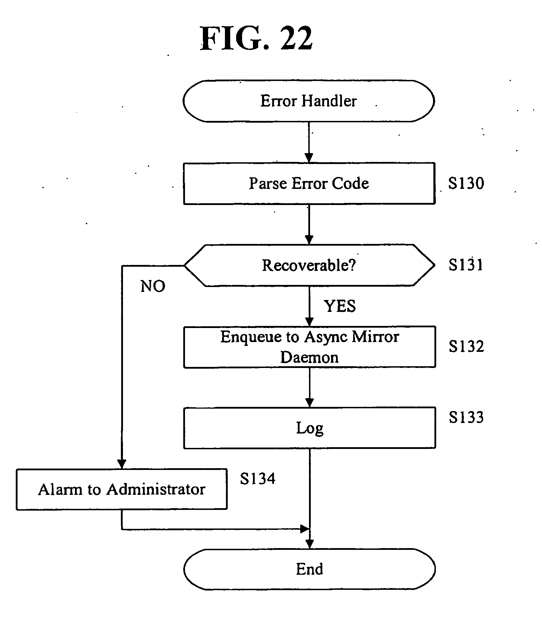

FIG. 22 is a flow chart illustrating the operation of the error handler function. The error handler function parses an error code (S130). When the error code is recoverable (Yes in S131), the error handler function enqueues to an async mirroring daemon (S132) and performs a logging operation (S133). If the error code is a fatal error (No in S131), an alarm sound is made to an operator's recognition (S134).

Next, crash recovery will now be described. A hard disk is potentially damaged by a bad sector, a file system crash, and the like, during its operation. In this case, if the selective mirroring has been being employed, the original file can be recovered.

As a method for handling the situation when there is a duplicate of the damaged original file, a first, there is an Alarm only method that alarms the user. The Alarm only allows the user to manually copy the corresponding file, and as the Alarm method, a log, a buzzer, an LED, an e-mail, a management program, and the like, may be used.

Next, there is a User Conformed Recovery method, a recovery by user selection. This method allows the user to recover the corresponding file through a management program and needs to interact with the management program.

In addition, there is an automatic Copy & Verify method. Through this method, the corresponding original file is renamed, the duplicate is coped as a new original file in the original copy directory, and the newly generated original file and the duplicate are compared and verified.

Also, there is a Redirect to Mirror method. In this method, the corresponding original file is renamed and a hard link indicating the duplicate is generated in the original copy directory. This method allows the quickest recovery for the user side, but its stability is degraded because only one copy exists.

Moreover, there is an Unintentional Deletion Backup method. When the original file is inadvertently deleted against a user's intention by the bad sector or in file system recovery process, for example, when the file is deleted without a user's direct delete command, the duplicate is not deleted but copied in an extra directory (./orphan). This operation is handled by Asnc Mirroring. Also, there is a possibility that the file is deleted as a problem arises in the file system or when a journaling or fsck command, etc., is executed. In such a case where file deletion is made against the user's intention, the Async Mirroring function may move the corresponding mirror file to the particular directory (./orphan) without immediately deleting the corresponding mirror file.

Also, there is a Bad Sector Recovery method. This method is a recovery with respect to a logical bad sector, which can be added as a separate function from the Selective Mirroring.

Also, there is a renaming method. This method is used when the original file is broken. When the original file is broken, there is a high possibility that the sector where the file is positioned is problematic, so the corresponding file and sector area must remain untouched for a later checkup. To this end, only the name of the corresponding may be changed and a prefix " crashed may be added before the file name.

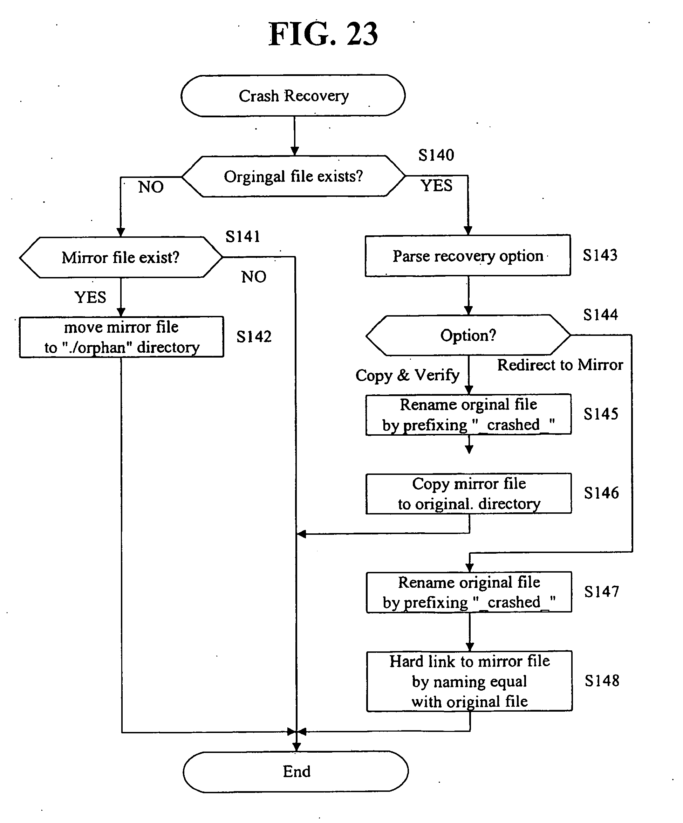

FIG. 23 is a flow chart illustrating the operation of the crash recovery function. The crash recovery function checks whether or not the original file exists in the occurrence of a crash error (S140). If the original file does not exist (No in S140), the crash recovery function checks whether or not a mirror file exists (S141). When a mirror file exists (Yes in S141), the crash recovery function moves the mirror file to "./orphan" directory (S142).

Meanwhile, when the original file exists (Yes in S140), the crash recovery function parses a recovery option stored in a configuration (S143). When the option is Copy & Verify (S144), the crash recovery function prefixes " _crashed._" to the name of the original file to rename it (S145) and copies the mirror file to the original directory (S146).

When the option is Redirect to Mirror (S144), the crash recovery function prefixes "_crashed_" to the name of the original file to rename it (S147) and hard-links a mirror file with the same name as that of the original file (S148).

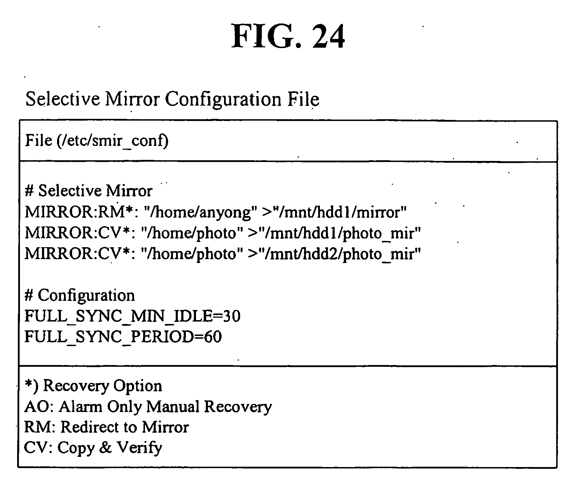

In the selective mirroring, a selective mirroring configuration file as shown in FIG. 24 may be read to prepare for a corresponding operation.

In #Selective Mirror in the configuration file of FIG. 24, MIRROR:RM: "/home/anyong" >"/mnt/hdd1/mirror" in the first line indicates dual-copying (or duplicating) of /home/anyong to a mirror of the HDD1, and MIRROR:CV : "/home/photo" >"/mnt/hdd1/photo_mir" in the second line indicates dual-copying of /home/photo to photo_mir of the HDD1. MIRROR: CV : "/home/photo" > "/mnt/hdd2/photo_mir" in the third line indicates dual-copying of /home/photo to photo_mir of the HDD2.

Also, in #Configuration, FULL_SYMC_MIN_IDLE=30 and FULL_SYNC_PERIOD=60 indicate that Full Sync must be performed when a system Idle is more than 30%, and the original-duplicate comparison period (unit: minute) in the Full Sync.

When the user or a configuration manager manually alters the configuration file during the operation of equipment, the fact that the configuration file has been altered can be informed of a selective mirroring daemon through a command such as, for example, echo 1 > /proc/reload sm_conf.

Accordingly, in the NAS system, mirroring can be performed by the directory or file designated by the user to improve both the data stability and user convenience, without having to configure a RAID. In addition, because the selective mirroring is implemented in the kernel layer, the substantially same performance as that of the RAID can be achieved and user's complicated configuration or program alteration are not required.

The NAS employing the selective mirroring method according to an exemplary embodiment of the present invention may include a processor 110, a plurality of I/O modules 120, a network interface 130, and a memory system 140 including a ROM 141, a main memory DRAM 142, and a large capacity storage 143. The respective elements may be connected by a bus system.

The bus system may include one or more buses which are connected through several bridges, controllers and/or adapters. For example, the bus system may be a system bus connected to one or more extended buses such as a PCI (Peripheral Component Interconnect) bus or the like by the medium of adapters.

The IO module 120 may be, for example, a key board, a mouse, a display device, and/or any other conventional I/O devices. The network interface 130 provides data communication between one and another computer systems in a network. The large capacity storage 143 may include a hard disk drive, an optical disk drive, an SSD, a network drive, a USB storage, and the like.

An operating system (OS), a main program operating the NAS, may be stored in the ROM 141 or the large capacity storage 143. When the NAS is turned on, the OS is loaded to the main memory 142 or an internal memory of the processor 110 and keeps residing therein to allow the user or application software to access a physical hardware device or other resources.

The kernel, a key part of the OS, is a resource manager that effectively manages resources of the system. The kernel, residing in the processor 110 and/or the main memory 142, manages hardware resources such as a device or a memory, manages a process schedule, implements a multi-process, and processes an I/O connected with the system.

The selective mirroring function according to an exemplary embodiment of the present invention is implemented in a linux kernel driving the NAS, and direct mirroring and sync/async mirroring function are performed through hooking of the file I/0 system call, an interface between the kernel and the user or an application, and in this case, one or more duplicates of a folder or a file included in a certain medium of the large capacity storage 143 are maintained in one or more storage mediums included in the large capacity storage 143.

Also, in the selective mirroring, the mirroring function is performed with reference to a configuration file stored in a medium of the ROM 141 or the large capacity storage 143. The configuration file may include a mirroring-subject file or directory, a direct mirroring/async mirroring selection, a medium for storing a mirrored file (duplicate copy), an async mirroring performance time or an async mirroring performance period, async mirroring execution terms, an error recovery method, and the like. The operational form of the selective mirroring may be modified by altering the configuration file even while the OS is operating.

For reference, the RAID and mirroring are conventional arts, so a detailed description thereof is omitted.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for maintaining one or more duplicates with respect to a single original, the method comprising:
performing a first operation and a second operation selectively;
wherein the first operation and second operation are performed at a kernel layer of an operating system (OS), and the first operation is performed through hooking of a file input/output call;
wherein the second operation comprises mirroring a second directory or a second file at a time point defined in a configuration file; wherein
the first operation comprises applying an input/output call to a first directory or a first file and one or more duplicates for the first directory or the first file at a time point when the input/output call occurs, and data is processed in unit of a message transmitted by an application which has generated the input/output call.

2. The method of claim 1, wherein the second operation implemented by a daemon of the kernel wakes up from a sleep state at a time point when mirroring is required to perform a given operation.

3. The method of claim 1, wherein the second operation is performed in case where all files and/or directories included in the second directory are to be mirrored, in case where an error occurs in the course of mirroring, or in case where mirroring is to be performed on a medium to which the first operation is impossible to be applied.

4. The method of claim 3, wherein, in the second operation, in case where all the files and/or directories included in the second directory are to be mirrored, an idle state of the system is considered each time mirroring is performed on a single file or directory within the directory.

5. The method of claim 3, wherein when an error occurs in the course of mirroring and if the error is recoverable, the error is registered to a list in which the second operation is to be performed for items.

6. The method of any one of the preceding claims, wherein the configuration file comprises at least one of one or more original files or directories to be mirrored, first operation/second operation selection, a medium for storing a duplicate copy, a second operation performance period, second operation execution terms, and a recovery method.

7. The method of any one of the preceding claims, wherein when the configuration file is modified, the modification of the configuration is provided to a mirroring daemon of the kernel.

8. A network storage system comprising a memory system including a ROM, a main memory, and a storage; the network storage system further comprising an input/output (I/O) module, a network interface, and a processor;
wherein the network storage system is adapted to perform a function, which is implemented in an operating system (OS) kernel which is stored in the ROM or the storage and loaded to and executed in the main memory or a memory within the processor when the system is turned on, said function for maintaining one or more duplicates in a certain medium or in a different medium of the storage with respect to the single original recorded in the certain medium and performing a first operation and a second operation selectively;
wherein the network storage system is further adapted to perform the first operation through hooking of a file input/output call;
wherein the network storage system is further adapted to perform the second operation by mirroring a second directory or a second file at a time point defined in a configuration file stored in the ROM or the storage; wherein
the network storage system is further adapted to perform the first operation by applying an input/output call to a first directory or a first file and one or more duplicates for the first directory or the first file at a time point when the input/output call occurs and to process data in unit of a message transmitted by an application which has generated the input/output call.

9. The system of claim 8, wherein, in the function, the second operation is performed in case where all files and/or directories included in the directory is to be mirrored, in case where an error occurs in the course of mirroring, or in case where mirroring is to be performed on a medium to which the first operation is impossible to be applied.

10. The system of claim 9, wherein, in the second operation, in case where all files and/or directories included in the directory is to be mirrored, an idle state of the system is considered each time mirroring is performed on a single file or directory within the directory.

11. The system of claim 9, wherein the system is further adapted to, when an error occurs in the course of mirroring and if the error is recoverable, register the error to a list in which the second operation is to be performed for items.

12. The system of any one of claims 8 to 11, wherein the configuration file comprises at least one of one or more original files or directories to be mirrored, first operation/second operation selection, a medium for storing a duplicate copy, a second operation performance period, second operation execution terms, and a recovery method.

13. The system of any one of claims 8 to 12, wherein the system is further adapted to, when the configuration file is modified, provide the modification of the configuration to a mirroring daemon of the kernel.

## Patentansprüche

1. Verfahren zum Vorhalten eines oder mehrerer Duplikate in Bezug auf ein einzelnes Original, wobei das Verfahren umfasst:
selektives Ausführen einer ersten Operation und einer zweiten Operation;
wobei die erste Operation und die zweite Operation in einer Kernel-Schicht eines Betriebssystems (OS) durchgeführt werden, und die erste Operation durch Hooking eines Dateieingabe/-ausgabe-Aufrufs vorgenommen wird;
wobei die zweite Operation ein Spiegeln eines zweiten Verzeichnisses oder einer zweiten Datei zu einem in einer Konfigurationsdatei festgelegten Zeitpunkt umfasst; wobei
die erste Operation ein Anwenden eines Eingabe/-Ausgabe-Aufrufs auf ein erstes Verzeichnis oder eine erste Datei und ein oder mehrere Duplikate für das erste Verzeichnis oder die erste Datei zu einem Zeitpunkt, zu dem der Eingabe/-Ausgabe-Aufruf erfolgt, umfasst, und Daten in einer Einheit einer Nachricht verarbeitet werden, die von einer Anwendung, die den Eingabe/-Ausgabe-Aufruf generiert hat, übertragen wird.

2. Verfahren nach Anspruch 1, wobei die zweite Operation, implementiert von einem Daemon des Kernels, aus einem Schlafzustand zu einem Zeitpunkt erwacht, zu dem eine Spiegelung erforderlich ist, um eine gegebene Operation auszuführen.

3. Verfahren nach Anspruch 1, wobei die zweite Operation in einem Fall ausgeführt wird, in dem alle in dem zweiten Verzeichnis enthaltenen Dateien und/oder Verzeichnisse zu spiegeln sind, in einem Fall des Auftretens eines Fehlers im Verlauf der Spiegelung, oder in einem Fall, in dem eine Spiegelung an einem Medium vorzunehmen ist, bei dem es nicht möglich ist, die erste Operation anzuwenden.

4. Verfahren nach Anspruch 3, wobei in der zweiten Operation, falls alle in dem zweiten Verzeichnis enthaltenen Dateien und/oder Verzeichnisse zu spiegeln sind, ein Ruhezustand des Systems jedes Mal dann in Betracht gezogen wird, wenn eine Spiegelung an einer einzelnen Datei oder einem einzelnen Ordner innerhalb des Verzeichnisses vorgenommen wird.

5. Verfahren nach Anspruch 3, wobei, wenn ein Fehler im Verlauf der Spiegelung auftritt und der Fehler behebbar ist, der Fehler in einer Liste registriert wird, in der die zweite Operation für Einträge auszuführen ist.

6. Verfahren nach einem der vorangehenden Ansprüche, wobei die Konfigurationsdatei mindestens eines von folgendem umfasst: eine oder mehrere zu spiegelnde Originaldateien oder -verzeichnisse, eine Auswahl aus erster Operation/zweiter Operation, ein Medium zum Speichern einer Duplikatskopie, eine zweite Operations-Durchführungsperiode, zweite Operations-Ausführungsbestimmungen, und ein Wiederherstellungsverfahren.

7. Verfahren nach einem der vorangehenden Ansprüche, wobei, wenn die Konfigurationsdatei modifiziert wird, die Modifikation der Konfiguration einem Spiegelungs-Daemon des Kernels bereitgestellt wird.

8. Netzwerk-Speicherungssystem mit einem Speichersystem, das einen ROM, einen Hauptspeicher und einen Speicher enthält; wobei das Netzwerk-Speicherungssystem ferner ein Eingabe/Ausgabe- (I/O) Modul, eine Netzwerk-Schnittstelle und einen Prozessor umfasst;
wobei das Netzwerk-Speicherungssystem eine Funktion auszuführen vermag, die in einem Betriebssystem- (OS-) Kernel implementiert ist, der in dem ROM oder dem Speicher gespeichert ist und in den Hauptspeicher oder einen Speicher in dem Prozessor geladen und darin ausgeführt wird, wenn das System hochgefahren wird, wobei die Funktion zum Vorhalten eines oder mehrerer Duplikate in einem bestimmten Medium oder in einem anderen Medium des Speichers in Bezug auf das in dem bestimmten Medium gespeicherte einzelne Original und zum selektiven Ausführen einer ersten Operation bzw. einer zweiten Operation dient;
wobei das Netzwerk-Speicherungssystem ferner die erste Operation durch Hooking eines Datei-Eingabe/-Ausgabe-Aufrufs auszuführen vermag;
wobei das Netzwerk-Speicherungssystem ferner die zweite Operation durch Spiegeln eines zweiten Verzeichnisses oder einer zweiten Datei zu einem in einer in dem ROM oder dem Speicher gespeicherten Konfigurationsdatei festgelegten Zeitpunkt auszuführen vermag; wobei
das Netzwerk-Speicherungssystem ferner die erste Operation durch Anwenden eines Eingabe/-Ausgabe-Aufrufs auf ein erstes Verzeichnis oder eine erste Datei und ein oder mehrere Duplikate für das erste Verzeichnis oder die erste Datei zu einem Zeitpunkt, zu dem der Eingabe/-Ausgabe-Aufruf erfolgt, auszuführen vermag, und Daten in einer Einheit einer Nachricht, die von einer Anwendung, die den Eingabe/- Ausgabe-Aufruf generiert hat, übertragen wird, zu verarbeiten vermag.

9. System nach Anspruch 8, wobei in der Funktion die zweite Operation in einem Fall ausgeführt wird, in dem alle in dem Verzeichnis enthaltenen Dateien und/oder Ordner zu spiegeln sind, in einem Fall des Auftretens eines Fehlers im Verlauf der Spiegelung, oder in einem Fall, in dem eine Spiegelung an einem Medium vorzunehmen ist, bei dem es nicht möglich ist, die erste Operation anzuwenden.

10. System nach Anspruch 9, wobei in der zweiten Operation in dem Fall, in dem alle in dem Verzeichnis enthaltenen Dateien und/oder Ordner zu spiegeln sind, ein Ruhezustand des Systems jedes Mal dann in Betracht gezogen wird, wenn eine Spiegelung an einer einzelnen Datei oder einem einzelnen Ordner innerhalb des Verzeichnisses vorgenommen wird.

11. System nach Anspruch 9, wobei das System ferner, wenn ein Fehler im Verlauf der Spiegelung auftritt und der Fehler behebbar ist, den Fehler in einer Liste zu registrieren vermag, in der die zweite Operation für Einträge auszuführen ist.

12. System nach einem der Ansprüche 8 bis 11, wobei die Konfigurationsdatei mindestens eines von folgendem umfasst: eine oder mehrere zu spiegelnde Originaldateien oder -verzeichnisse, eine Auswahl aus erster Operation/zweiter Operation, ein Medium zum Speichern einer Duplikatskopie, eine zweite Operations-Durchführungsperiode, zweite Operations-Ausführungsbestimmungen, und ein Wiederherstellungsverfahren.

13. System nach einem der Ansprüche 8 bis 12, wobei das System ferner, wenn die Konfigurationsdatei modifiziert wird, die Modifikation der Konfiguration einem Spiegelungs-Daemon des Kernels bereitzustellen vermag.

## Revendications

1. Procédé pour conserver un ou plusieurs doubles par rapport à un original unique, le procédé comprenant :
l'exécution d'une première opération et d'une deuxième opération sélectivement ;
dans lequel la première opération et la deuxième opération sont exécutées au niveau d'une couche de noyau d'un système d'exploitation (OS), et la première opération est exécutée par l'intermédiaire d'un raccordement d'un appel d'entrée/de sortie de fichier ;
dans lequel la deuxième opération comprend la mise en miroir d'un deuxième répertoire ou d'un deuxième fichier à un point dans le temps défini dans un fichier de configuration ; dans lequel
la première opération comprend l'application d'un appel d'entrée/de sortie à un premier répertoire ou un premier fichier et un ou plusieurs doubles pour le premier répertoire ou le premier fichier à un point dans le temps où l'appel d'entrée/de sortie a lieu, et des données sont traitées dans une unité d'un message transmis par une application qui a généré l'appel d'entrée/de sortie.

2. Procédé selon la revendication 1, dans lequel la deuxième opération mise en oeuvre par un démon du noyau se réveille d'un état de sommeil à un point dans le temps où la mise en miroir est requise pour exécuter une opération donnée.

3. Procédé selon la revendication 1, dans lequel la deuxième opération est exécutée dans le cas où tous les fichiers et/ou répertoires inclus dans le deuxième répertoire doivent être mis en miroir, dans le cas où une erreur apparaît au cours de la mise en miroir, ou dans le cas où la mise en miroir doit être exécutée sur un support auquel il est impossible d'appliquer la première opération.

4. Procédé selon la revendication 3, dans lequel, dans la deuxième opération, dans le cas où tous les fichiers et/ou répertoires inclus dans le deuxième répertoire doivent être mis en miroir, un état de veille du système est considéré à chaque fois qu'une mise en miroir est exécutée sur un fichier ou répertoire unique au sein du répertoire.

5. Procédé selon la revendication 3, dans lequel, lorsqu'une erreur apparaît au cours de la mise en miroir et si l'erreur est récupérable, l'erreur est enregistrée dans une liste dans laquelle la deuxième opération doit être exécutée pour des éléments.

6. Procédé selon l'une quelconque des revendications précédentes, dans lequel le fichier de configuration comprend au moins un d'un ou plusieurs fichiers ou répertoires d'origine devant être mis en miroir, d'une sélection de première opération/deuxième opération, d'un support pour stocker une copie en double, d'une période d'exécution de deuxième opération, de conditions d'exécution de deuxième opération, et d'un procédé de récupération.

7. Procédé selon l'une quelconque des revendications précédentes, dans lequel, lorsque le fichier de configuration est modifié, la modification de la configuration est délivrée à un démon de mise en miroir du noyau.

8. Système de stockage en réseau comprenant un système de mémoire incluant une ROM, une mémoire principale, et un stockage ; le système de stockage en réseau comprenant en outre un module d'entrée/sortie (E/S), une interface réseau, et un processeur ;
dans lequel le système de stockage en réseau est adapté à exécuter une fonction, qui est mise en oeuvre dans un noyau de système d'exploitation (OS) qui est stocké dans la ROM ou le stockage et chargé et exécuté dans la mémoire principale ou une mémoire au sein du processeur lorsque le système est mis sous tension, ladite fonction pour conserver un ou plusieurs doubles sur un certain support ou sur un support différent du stockage par rapport à l'original unique enregistré sur le certain support et exécuter une première opération et une deuxième opération sélectivement ;
dans lequel le système de stockage en réseau est en outre adapté à exécuter la première opération par l'intermédiaire d'un raccordement d'un appel d'entrée/de sortie de fichier ;
dans lequel le système de stockage en réseau est en outre adapté à exécuter la deuxième opération par une mise en miroir d'un deuxième répertoire ou d'un deuxième fichier à un point dans le temps défini dans un fichier de configuration stocké dans la ROM ou le stockage ; dans lequel
le système de stockage en réseau est en outre adapté à exécuter la première opération en appliquant un appel d'entrée/de sortie à un premier répertoire ou un premier fichier et un ou plusieurs doubles pour le premier répertoire ou le premier fichier à un point dans le temps où l'appel d'entrée/de sortie a lieu, et à traiter des données dans une unité d'un message transmis par une application qui a généré l'appel d'entrée/de sortie.

9. Système selon la revendication 8, dans lequel, dans la fonction, la deuxième opération est exécutée dans le cas où tous les fichiers et/ou répertoires inclus dans le répertoire doivent être mis en miroir, dans le cas où une erreur apparaît au cours de la mise en miroir, ou dans le cas où la mise en miroir doit être exécutée sur un support auquel il est impossible d'appliquer la première opération.

10. Système selon la revendication 9, dans lequel, dans la deuxième opération, dans le cas où tous les fichiers et/ou répertoires inclus dans le répertoire doivent être mis en miroir, un état de veille du système est considéré à chaque fois qu'une mise en miroir est exécutée sur un fichier ou répertoire unique au sein du répertoire.

11. Système selon la revendication 9, dans lequel le système est en outre adapté à, lorsqu'une erreur apparaît au cours de la mise en miroir et si l'erreur est récupérable, enregistrer l'erreur dans une liste dans laquelle la deuxième opération doit être exécutée pour des éléments.

12. Système selon l'une quelconque des revendications 8 à 11, dans lequel le fichier de configuration comprend au moins un d'un ou plusieurs fichiers ou répertoires d'origine devant être mis en miroir, d'une sélection de première opération/deuxième opération, d'un support pour stocker une copie en double, d'une période d'exécution de deuxième opération, de conditions d'exécution de deuxième opération, et d'un procédé de récupération.

13. Système selon l'une quelconque des revendications 8 à 12, dans lequel le système est en outre adapté à, lorsque le fichier de configuration est modifié, délivrer la modification de la configuration à un démon de mise en miroir du noyau.
